# EUROPEAN PATENT SPECIFICATION

(11) **EP 1 650 320 B1**
(45) Date of publication and mention of the grant of the patent: **16.03.2011**
(21) Application number: 04736583.8
(22) Date of filing: 10.06.2004
(51) Int. Cl.: C23C 8/10, C22C 38/00, C21D 1/76, C21D 6/00

(54) **METHOD FOR PRODUCING STEEL FOR HYDROGEN GAS ENVIRONMENT**
HERSTELLUNG VOM STAHL FÜR DIE WASSERSTOFFGASUMGEBUNG
PROCEDE DE PRODUCTION DU ACIER POUR ENVIRONNEMENT DE GAZ HYDROGENE

(30) Priority: 10.06.2003 JP 2003165673; 10.06.2003 JP 2003165671
(43) Date of publication of application: 26.04.2006
(73) Proprietor: Sumitomo Metal Industries Limited, Osaka-shi, Osaka 541-0041 (JP)
(72) Inventor: Omura, T., c/o Sumitomo Metal Industries, Ltd., Osaka-shi, Osaka 5410041 (JP); Igarashi, M., c/o Sumitomo Metal Industries, Ltd., Osaka-shi, Osaka 5410041 (JP); Miyahara, M., c/o Sumitomo Metal Industries, Ltd., Osaka-shi, Osaka 5410041 (JP); Ogawa, K., c/o Sumitomo Metal Industries, Ltd., Osaka-shi, Osaka 5410041 (JP); Semba, H., c/o Sumitomo Metal Industries, Ltd., Osaka-shi, Osaka 5410041 (JP)
(74) Representative: Simons, Amanda Louise
(86) International application number: PCT/JP2004/008470
(87) International publication number: WO 2004/111291

(56) References cited:
- DE-A1- 3 447 228
- GB-A- 2 092 621
- GB-A- 2 159 542
- JP-A- 7 268 669
- JP-A- 9 503 026
- JP-A- 49 054 229
- JP-A- 2001 303 233
- JP-A- 2003 154 437
- US-A- 4 555 275
- US-A1- 2002 121 461
- JHA R ET AL: "The formation of diffusion coatings on some low-alloy steels and their high temperature oxidation behaviour: Part 1 diffusion coatings" CALPHAD: COMPUTER COUPLING OF PHASE DIAGRAMS AND THERMOCHEMISTRY ELSEVIER UK, vol. 25, no. 4, December 2001 (2001-12), pages 651-665, XP002392169 ISSN: 0364-5916
- YOSHIDA M ET AL: "Passivation of stainless steel by &dgr;-Al2O3 films resistant to ozonized water" JOURNAL OF VACUUM SCIENCE AND TECHNOLOGY A. VACUUM, SURFACES AND FILMS, AMERICAN INSTITUTE OF PHYSICS, NEW YORK, NY, US, vol. 17, no. 3, May 1999 (1999-05), pages 1059-1065, XP012004445 ISSN: 0734-2101
- FUKAI T ET AL: "Surface modification effects on hydrogen permeation in high-temperature, high-pressure, hydrogen-hydrogen sulfide environments" CORROSION USA, vol. 50, no. 7, July 1994 (1994-07), pages 522-530, XP002392170 ISSN: 0010-9312

## Description

This invention relates to the use of a steels in a hydrogen gas environment, and a method for their manufacture. More particularly, it relates to the use of a steels which do not undergo hydrogen embrittlement in a a high pressure hydrogen gas environment of 35 MPa or above, and to a method for their manufacture.

Fuel cell automobiles obtain electric power using hydrogen and oxygen as fuels, and they are attracting attention as the next generation of clean automobiles which do not discharge harmful substances such as carbon dioxide (CO₂), nitrogen oxides (NOₓ), or sulfur oxides (SOₓ) as do conventional gasoline-powered automobiles or diesel-powered automobiles. In Japan, fuel cell automobiles equipped with a hydrogen gas cylinder were sold in 2002, and a number of fuel cell automobiles have already been used as government vehicles for the Ministry of Land, Infrastructure, and Transport, for example, and it is planned to introduce 5 million vehicles by the year 2020.

However, due to restrictions on the size of gas cylinders, present-day fuel cell automobiles can continuously travel for at most around 300 kilometers, and this is becoming an impediment to their wider use. In the future, from the viewpoint of increasing the running distance, a high pressure of 35 - 70 Mpa will be demanded as the pressure of hydrogen gas housed in a gas cylinder mounted on a vehicle. As a result, it will become necessary to use a material which is safe even when exposed to a high pressure hydrogen environment for equipment such as storage vessels, piping, and charging valves used in hydrogen gas stations for supplying hydrogen gas.

GB-A-2 092 621 describes the formation of oxide layers on alloy steels. The oxide surface layer produced is intended to inhibit continued oxidation of the steel material.

Jha et al (Calphad, Vol. 25, No. 4, December 2001 (2001-12), pages 651-665) discusses the thermostability of aluminised coatings on Fe alloys containing Ni, Si and Cr and of chromised coatings on Fe alloys containing Ni and Si.

Yoshida et al (J. Vac. Sci. Technol. A 17 (3) May/June 1999, pages 1059 to 1065) discusses alumina films on Al-containing stainless steel and the corrosion resistance of such films in the presence of ozone gas and ozonised water.

Fukai et al (Corrosion USA, Vol. 50, No. 7, July 1994 (1994-07) pages 522 to 530) provides a study of surface modifications on chromium-molybdenum steel and the behaviour of the surface-modified steels in a hydrogen-hydrogen sulphide environment. Resistance to hydrogen permeation is reported.

### Disclosure of the Invention

When steel is used in a hydrogen gas environment and particularly a high pressure hydrogen gas environment, there is concern of the problem of the hydrogen embrittlement caused by penetration of hydrogen into the steel. However, according to conventional knowledge, hydrogen embrittlement of steel in a hydrogen gas environment has been said to occur in a high temperature region which is normally higher than 200°C. This is because in order for hydrogen to penetrate into steel, it is necessary for hydrogen gas molecules which are adsorbed by the steel surface to disassociate to form hydrogen gas atoms, and this disassociation reaction has been thought to occur only at 200°C or above. In contrast, the temperature of use of hydrogen gas cylinders or hydrogen gas stations is a low level from room temperature up to 100°C, and it has been thought that it was unnecessary to worry about hydrogen embrittlement.

However, in research performed in recent years, it has been confirmed that hydrogen embrittlement can occur in a specific hydrogen gas environment such as a high pressure hydrogen gas environment even with a low alloy steel or with an austenitic stainless steel for which it was thought to be more difficult for hydrogen embrittlement to occur compared to ferritic stainless steel.

As a result of detailed investigation of the depth of hydrogen penetration into steel in a hydrogen gas environment, the present inventors found that even in a temperature range from room temperature to 100 °C, an unexpectedly large amount of hydrogen penetrates into steel.

Accordingly, it is desirable to use a material which does not undergo hydrogen embrittlement for equipment used in a high pressure hydrogen gas environment such as a gas cylinder mounted on the above-described fuel cell automobile.

The object of the present invention is to provide steels which do not undergo hydrogen embrittlement even when used in a hydrogen gas environment and a method for their manufacture. The present invention provides the use of certain steels in a high pressure hydrogen atmosphere, and a method for their production, as set out in the claims

Test pieces measuring 50 mm wide, 50 mm long, and 0.5 mm thick were taken from steel sheets having the chemical compositions shown in Table 1, they were placed into an autoclave filled with hydrogen gas at 100°C and 35 MPa, and after an exposure test was carried out for 300 hours, the amount of hydrogen absorbed by the steel was analyzed. The results for conventional examples are shown in Table 2 as Nos. 1, 2, 5, and 6. It was confirmed that a large amount of hydrogen on the order of approximately 15 - 30 ppm was absorbed.

It is known to form a Cr oxide film having a thickness from several nm up to at most 100 nm on the surface of gas piping or components of stainless steel used in semiconductor manufacture in order to decrease the discharge and dissolving out of impurities.

Technology is also known which utilizes Al oxides in stainless steel for use in ultrapure water containing ozone.

The present inventors formed a Fe oxide film, a Fe-Mn oxide film, a Cr oxide film, or an Al oxide film on the surface of test pieces by heat treatment in air, and they ascertained whether an effect of suppressing hydrogen penetration

was produced.

The results are shown as Nos. 3, 4, 7, and 8, respectively, in Table 2. As can be seen from these results, even with such oxide films, hydrogen penetrated into the steel in an amount of approximately 15 to approximately 20 ppm, and it was ascertained that there was no effect of suppressing hydrogen penetration. The reason for this is thought to be that a conventional oxide film is applied with the object of providing a chemical protective action by increasing corrosion resistance and preventing impurities from dissolving out, and it does not necessarily have a physical protective action of preventing permeation of hydrogen, which is the smallest element.

**Table 1**

| Steel | Chemical Compositon (mass%, balance of Fe and inpurities) | | | | | | | |
|---|---|---|---|---|---|---|---|---|
| | C | Si | Mn | P | S | Cr | Ni | Al |
| A | 0.061 | 0.17 | 1.27 | 0.005 | 0.001 | 0.55 | - | - |
| B | 0.392 | 0.20 | 0.80 | 0.025 | 0.010 | 1.11 | - | 0.031 |
| I | 0.011 | 0.23 | 0.45 | 0.020 | 0.002 | 17.96 | 13.75 | 0.022 |
| J | 0.008 | 0.02 | 0.51 | 0.008 | 0.001 | 17.56 | 15.22 | 1.121 |

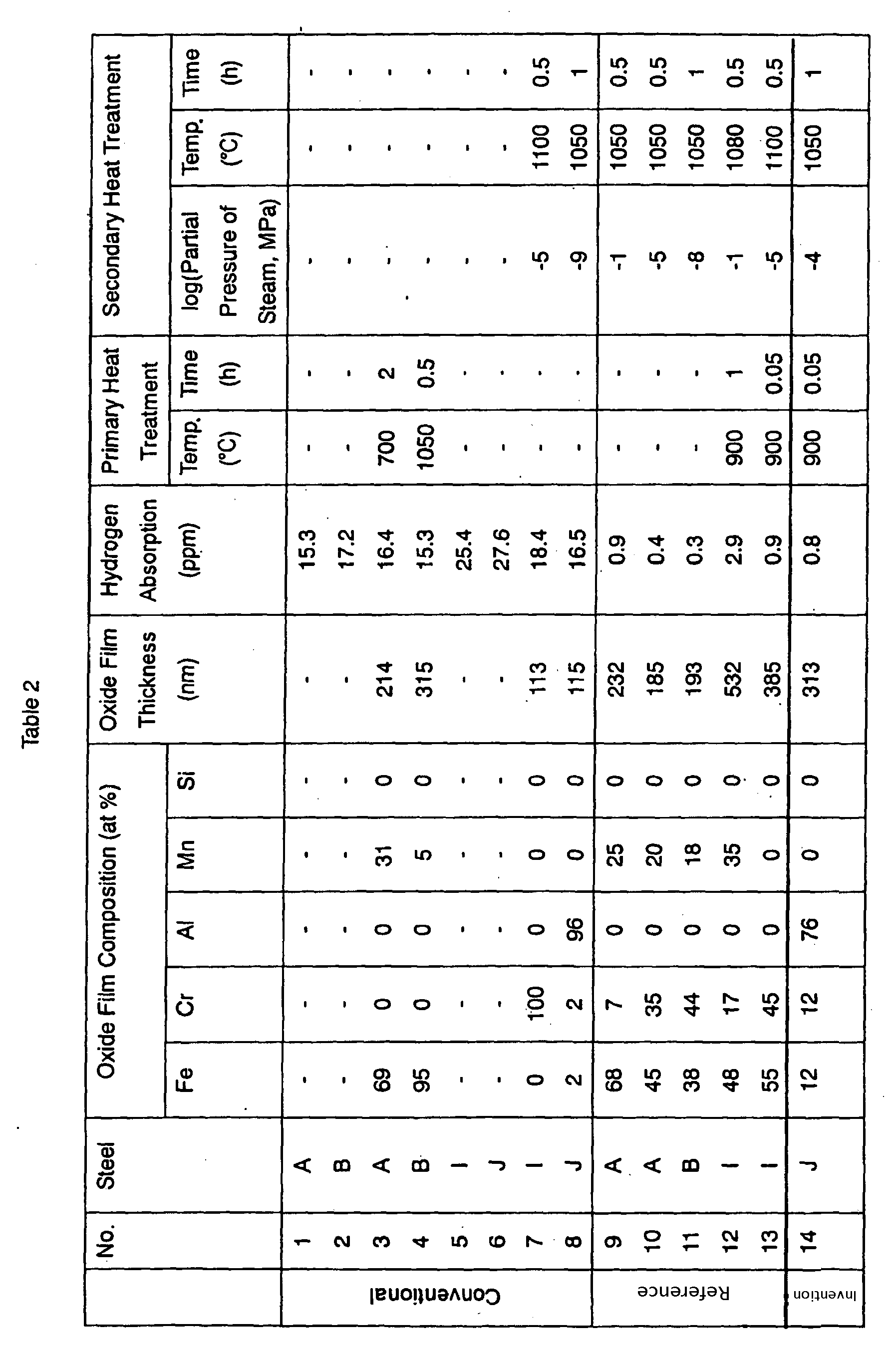

A material which absorbs several tens of ppm of hydrogen even in such an environment absorbs and stores even a larger amount of hydrogen in a higher pressure hydrogen gas environment, and the danger of hydrogen embrittlement further increases.

However, such surface modification has the advantage that it can exhibit a protective action regardless of types of the base material, and the present inventors focused on surface modification so as to suppress penetration of hydrogen into steel and to prevent hydrogen embrittlement. As a result of diligent investigation of types of film having a protective action for preventing permeation of hydrogen, they unexpectedly found that by performing heat treatment in a hydrogen atmosphere containing a controlled steam partial pressure after heat treatment in air, if a compound oxide film containing Al and at least one of Fe and Cr in the form of an oxide is formed to at least a desired thickness, the effect of preventing permeation of hydrogen is exhibited, and penetration of hydrogen into the steel and therefore hydrogen embrittlement of the steel can be prevented.

Nos. 9 - 11 in Table 2 show examples in which heat treatment in a hydrogen atmosphere containing a controlled partial pressure of steam was carried out and a complicated oxide film was formed on the surface of the base metal, and Nos. 12 - 14 show examples in which heat treatment in air was carried out as initial heat treatment and then heat treatment in a hydrogen atmosphere containing a controlled partial pressure of steam was carried out as second heat treatment, and a compound oxide film was formed on the surface of the base metal. It can be seen that when the amount of absorbed hydrogen at this time was at most approximately 3 ppm, permeation of hydrogen was effectively prevented. The amount of absorbed hydrogen was measured in the same manner for the conventional examples of Table 2.

Since a compound oxide film which is formed by the above-described heat treatment has a fine and complicated structure, it is thought that even hydrogen, which is the smallest element, cannot easily permeate it. Such a complicated, fine film cannot be formed by only conventional heat treatment performed in air. It was found that it was stably formed for the first time by heat treatment in a reducing atmosphere having a controlled atmosphere, temperature, and heating time or by heat treatment in such a reducing atmosphere after heat treatment in air.

It was also found that from the standpoint of preventing hydrogen permeation, in contrast to the conventional theory of forming an oxide film, it is desirable to provide a compound oxide film having a complicated, fine structure. In particular it was found that a compound oxide film having a prescribed content of Fe, Cr, and Al has the greatest effect on preventing hydrogen permeation.

Namely, when it is desired to obtain a chemical protecting action, it is desirable to form a chemically stable Cr oxide film or Al oxide film as a single phase as much as possible and to avoid intermixing therein of oxides such as Fe oxides or Mn oxides. However, in order to obtain a physical protective action for preventing hydrogen permeation, it is preferable to have a compound oxide film with a complicated and fine structure. In particular, a compound oxide film containing a prescribed amount of Fe, Cr, and Al in the form of oxides provides the greatest effect of preventing hydrogen permeation.

### Brief Description of the Drawings

Figure 1 is a graph showing the relationship of the film thickness and the amount of Cr in a film to a hydrogen penetration suppressing effect.
Figures 2 and 3 are graphs showing the distribution of alloying elements inside a conventional single phase oxide film.
Figures 4 - 9 are graphs showing the distribution of alloying elements inside a compound oxide film according to the present invention.

### Best Forms for Carrying Out the Invention

The reasons why the composition of a compound oxide film on the surface layer of a steel is restricted in the above-described manner will next be explained. In this specification, the composition of a "compound oxide film" is prescribed in "atom %", while the steel composition itself is prescribed in "mass %".

In order to prevent hydrogen permeation into a steel in a high pressure hydrogen gas environment, a compound oxide film having a complicated and fine structure is formed on the surface of the steel.

The composition of a compound oxide film for preventing hydrogen permeation contains Al and at least one of Cr and Fe in the form of an oxide. Representative combinations thereof are the following combinations: Fe and Al, Cr and Al, and Cr and Fe and Al.

The contents of Fe, Cr, and Al in these four compound oxide films are at least 5 atom % for each element.

If a compound oxide film containing at least 50 atom % of Al is formed, since Al is an element exhibiting a strong anti-affinity for hydrogen, the effect of preventing hydrogen permeation can be further strengthened.

In the case of a compound oxide film containing Fe and Cr, if the compound oxide film is one containing at least 30 atom % of each of Fe and Cr, the structure can be made even more complicated and fine, and the effect of preventing hydrogen permeation can be further strengthened.

The reasons why such a compound oxide film has the effect of suppressing penetration of hydrogen have not yet been fully elucidated. However, when carrying out initial heat treatment for forming an initial Fe oxide film and then carrying out second heat treatment to form a Cr oxide film and/or an Al oxide film, it is thought that defects formed at the time of initial heat treatment are filled in by growth of the Cr oxide film and/or the Al oxide film.

In general, the diffusion coefficient of hydrogen in oxides is extremely low compared to that in metals. Accordingly, even with a single phase oxide film, it should be possible to produce an effect of suppressing penetration of hydrogen by forming an oxide film.

However, when an Fe oxide film is formed by heat treatment in air, defects form in the Fe oxide film, and it is thought that the defects result in the effect of preventing hydrogen penetration no longer being obtained. The reason for this phenomenon is thought to be that during the process of forming an Fe oxide film, volumetric expansion takes place due to absorption of oxygen, but the coefficient of thermal expansion of an oxide is large compared to that of metal. Thus, during the process of cooling the Fe oxide film, Fe oxides contract more than the ferrous matrix metal, and defects are formed in the Fe oxide film. It is thought that as a result, the effect of preventing penetration of hydrogen is no longer exhibited.

It is hypothesized that if a Cr oxide film and/or an Al oxide film is formed by carrying out heat treatment in a hydrogen atmosphere, since these oxides have a small coefficient of thermal expansion compared to Fe oxides, the formation of defects is suppressed during the process of shrinkage of these oxides, and as a result, the effect of suppressing hydrogen penetration is exhibited.

Al is characterized by exhibiting anti-affinity for hydrogen, and it produces an even stronger effect of suppressing hydrogen penetration.

Regardless of how complicated and fine is the structure of a compound oxide film, permeation of hydrogen easily takes place with a thin film, and the thickness is at least 100 nm. There is no particular restriction on the upper limit of the thickness of this compound oxide film from the standpoint of preventing hydrogen permeation, but normally, if its thickness exceeds 1000 nm, the adhesion between the compound oxide film and the base metal decreases and localized peeling occurs, and the effect of suppressing hydrogen penetration ends up decreasing. Therefore, it is preferably at most 1000 nm.

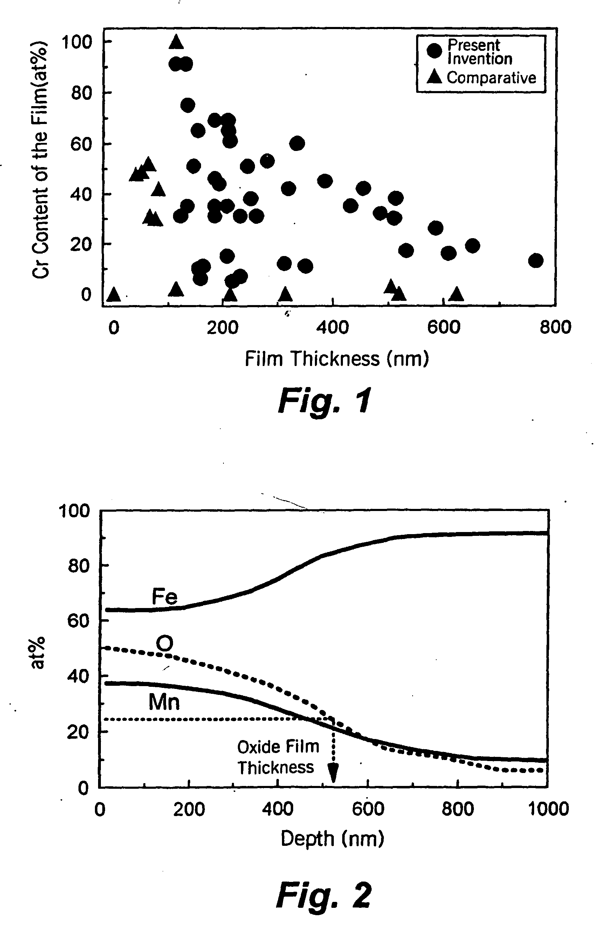

Figure 1 shows the relationship between the thickness of a compound oxide film on the surface of a steel and the amount of Cr (atom %) in the film based on data in examples to be described below. A solid circle indicates an example of the present invention in which the amount of absorbed hydrogen was less than 10 ppm, and a solid triangle indicates a comparative example in which the amount of absorbed hydrogen was at least 10 ppm. Of course, oxides of Al and/or Fe were included in the film at this time. From Figure 1, it can be seen that in either case, an effect of preventing hydrogen permeation was obtained if the film thickness was at least 100 nm.

As will be explained with respect to Figure 2, the thickness of the compound oxide film at this time refers to the distance from the surface to the depth at which the amount of oxygen becomes 1/2.

A covering comprising a metal layer of Al, Cu, or Zn may be formed atop the above-described compound oxide film by plating or flame coating, for example, whereby the effect of preventing hydrogen permeation is further increased.

This metal layer itself has no effect on suppressing hydrogen permeation, but these metal elements have an anti-affinity for hydrogen. Thus, they have the effect of decreasing adsorption of hydrogen. In order to obtain this effect, it is preferable to form a metal layer having a thickness of at least 100 nm. The metal elements may be in elemental form, or they may be in the form of an alloy. In the present invention, the above-described metal layer includes all alloys of Al, Cu, and Zn.

According to the method of the present invention, in order to form a compound oxide film having an effect of preventing hydrogen permeation, in contrast to a conventional method having the object of forming a single phase oxide film, two stages of oxidizing heat treatment are carried out while controlling the temperature, the atmosphere, and the time.

First, as initial heat treatment, heat treatment is carried out by holding in air at 600 - 900°C for at least 3 minutes and at most 2 hours to form an oxide film formed primarily of Fe. If the treatment temperature at this time is less than 600 °C or if the heat treatment time is less than 3 minutes, an oxide film formed primarily of Fe does not adequately grow. If the heat treatment temperature exceeds 900°C, there is excessive formation of an oxide film formed primarily of Fe, and a compound oxide film is not formed in the subsequent second heat treatment. In addition, a heat treatment time which exceeds 2 hours leads to a decrease in productivity, which is undesirable.

As second heat treatment, heat treatment is carried out by holding in a hydrogen atmosphere at a partial pressure of steam of 10⁻⁸ to 10⁻¹ MPa at a temperature of at least 700°C and preferably at least 1000 °C and at most 1200 °C for at least 3 minutes and at most 2 hours, and the oxide film formed primarily of Fe which is obtained from the above-described initial heat treatment is modified to obtain a compound oxide film.

Namely, a compound oxide film having an oxide film of Cr or Al intermixed with an oxide film of Fe is formed. When the steel which is the base metal has a high content of Al, a compound oxide film containing primarily oxides of Cr and Al can be formed. This heat treatment also serves as solid solution heat treatment for dissolving carbides and intermetallic compounds in the steel, so it has the effect of guaranteeing corrosion resistance and mechanical properties of the base metal.

When the partial pressure of steam is less than 10⁻⁸ MPa, or when the heat treatment temperature is less than 700 °C and particularly when it is less than 1000 °C in the case of stainless steel, or when the heat treatment time is less than 3 minutes, an oxidation reaction does not progress, and an oxide film having a sufficient thickness is not formed. On the other hand, when the steam partial pressure exceeds 10⁻¹ MPa or when the heat treatment temperature exceeds 1200 °C, the oxide film become too thick, their adhesion to the base metal decreases, and the effect of preventing hydrogen permeation is weakened. In addition, a heat treatment time exceeding 2 hours leads to a decrease in productivity, which is undesirable.

In this manner, a compound oxide film containing at least 5 atom % each of Al and at least one of Fe and Cr is formed.

In order to form a compound oxide film containing at least 30 atom % each of Fe and Cr so as to further strengthen the effect of preventing hydrogen permeation, after performing the initial heat treatment, second heat treatment is performed while controlling the partial pressure of steam to be in the range of 10⁻⁷ to 10⁻² MPa.

A compound oxide film containing Fe and Al, or Cr and Al, or Fe and Cr and Al can be formed by using a steel containing at least 0.005% of Al in steel.

In order to form a compound oxide film containing at least 50 atom % of Al so as to further strengthen the effect of preventing hydrogen permeation, a base metal containing at least 1% of Al can be used, and after performing initial heat treatment, the second heat treatment can be performed while controlling the steam partial pressure to be within the range of 10⁻⁷ to 10⁻⁴ MPa. However, when using a base metal containing at least 3% of Al, the initial heat treatment is preferably omitted, and a desired Al containing compound oxide film can be easily obtained by conducting only second heat treatment in which the steam vapor pressure is controlled to be in the range of 10⁻⁷ to 10⁻⁴ MPa. This is because Al is an element which easily oxidizes compared to Fe or Cr. If a large amount of Al is contained in steel, a compound oxide film formed primarily of Al and Cr having a sufficient thickness can be obtained.

The base metal on which the compound oxide film is formed is one containing 12 - 30 mass % of Cr and 0.005 - 6% of Al.

Due to the provision of a compound oxide film a steel having such a composition has low susceptibility to hydrogen embrittlement in a hydrogen gas environment and particularly in a high pressure hydrogen gas environment. Accordingly, this steel is extremely useful for components of structural equipment used in high pressure hydrogen gas such as vessels and piping and accessories therefor (such as valves and measuring equipment).

A steel having a compound oxide film as desenbed above can of course be used in a hydrogen gas environment of less than 35 MPa.

According to the present invention such steels may be used in the form of pipes, plates, shaped members, and rods, for example. There are no particular restrictions on the exact form as long as the desired effect can be exhibited when it is used in a hydrogen gas environment. Penetration of hydrogen to the base metal can be effectively prevented by forming an oxide film by heat treatment. If the steel is first formed into a final shape by usual means, and then the compound oxide film is formed on the surface thereof by heat treatment, treatment for preventing absorption of hydrogen can be carried out even on a product having a complicated shape.

The structure of the base metal of a steel for use according to the present invention is preferably an austenitic stainless steel from the standpoint of preventing hydrogen embrittlement. However, taking into consideration mechanical properties and cost, a ferritic stainless steel or a martensitic stainless steel or a two-phase stainless steel may also be used. A low alloy steel may also be used.

From the standpoint of practicality, a stainless steel or a low alloy steel having a composition as described below is preferred.

An austenitic steel, which is a preferred base metal in an embodiment of the present invention, has a basic chemical composition containing, in mass %, C: at most 0.04%, Si: at most 1.0%, P: at most 0.03%, S: at most 0.01%, Cr: 12 - 30%, Ni: 5 - 30%, Al: 0.005 - 6%, and O (oxygen): at most 0.01%. If necessary, it can further include the following optional elements.
(1) At least one of Mo: 0.3 - 3% and W: 0.3 - 6%
(2) At least one of Mn: 0.3 - 30%, N: 0.05 - 0.5%, Cu: 0.3 - 5%, and Co: 0.3-10%
(3) At least one of Ti: 0.001 - 0.1 %, Zr: 0.001 - 0.1 %, Nb: 0.001 - 0.2%, V: 0.001 - 1.0%, Ta: 0.001 - 0.4%, and Hf: 0.001 - 0.1%
(4) At least one of B: 0.0001 - 0.02%, Mg: 0.0001 - 0.005%, Ca: 0.0001 - 0.005%, La: 0.0001 - 0.2%, Ce: 0.0001 - 0.2%, Y: 0.0001 - 0.4%, Sm: 0.0001 - 0.4%, Pr: 0.0001 - 0.4%, and Nd: 0.0001 - 0.5%

The reasons why a preferred steel composition is prescribed in the above manner are as follows.

### Cr: 12 - 30%

Cr is effective at increasing rusting resistance and pitting resistance, but with less than 12%, the rusting resistance and pitting resistance expected of a stainless steel cannot be obtained. On the other hand, if it is contained in excess of 30%, resistance to hydrogen embrittlement decreases, and its upper limit is defined as 30%.

### C: at most 0.04%

C is present in steel as an impurity. If its content exceeds 0.04%, it becomes easy for carbides to precipitate, and rusting resistance and pitting resistance decrease. Therefore, its upper limit is defined as 0.04%.

### Si: at most 1.0%

Si may be present in steel as an impurity, or it may be deliberately added as an alloying element. If its content exceeds 1.0%, it promotes the formation of intermetallic compounds, and hot workability and toughness decrease. Therefore, its upper limit is made 1.0%.

### P: at most 0.03%

P is present in steel as an impurity. It dissolves in an active form and lowers resistance to rusting and pitting. If the P content exceeds 0.03%, these effects become marked, so its content is made at most 0.03%. The P content is preferably made as low as possible.

### S: at most 0.01%

S is present in steel in a form of sulfide inclusions. If these sulfides dissolve, rusting resistance and pitting resistance decrease. If the S content exceeds 0.01 %, this effect becomes marked, so its content is made at most 0.01 %. The S content is preferably to be as low as possible.

### Ni: 5 - 30%

Ni is an element which stabilizes an austenite phase, but its effect is inadequate if its content is less than 5%. On the other hand, if it is contained in excess of 30%, resistance to hydrogen embrittlement decreases, and its upper limit is preferably made 30%.

### Al: 0.005 - 6%

Al is an important element in the present invention. It forms a compound oxide film together with Fe and Cr on the surface of steel and it produces the effect of suppressing hydrogen penetration. For this purpose, its content is made at least 0.005%. If its content is at least 1% and heat treatment is carried out in a prescribed atmosphere, Al oxides are formed in the surface layer, and it manifests the effect of suppressing hydrogen permeation. On the other hand, if its content is too high, intermetallic compounds and Al nitrides precipitate, and hot workability and toughness decrease. Therefore, its upper limit is preferably 6%.

### O (oxygen): at most 0.01 %

Like S, O is unavoidably present in steel. It is present in the form of oxide inclusions. Oxide inclusions present in a surface layer become the starting point of pitting and worsen pitting resistance. If the content of O (oxygen) exceeds 0.01 %, the amount of coarse oxides increase, and this tendency becomes marked, so its upper limit is defined as 0.01%. The content of O (oxygen) is preferably to be as low as possible.

### Mo: 0.3 - 3%, W: 0.3 - 6%

These elements need not be included, but if they are included, they have the effect of increasing rusting resistance and pitting resistance. In order to obtain this effect, it is necessary to include at least 0.3% of each. On the other hand, if too much is included, intermetallic compounds precipitate, and hot workability and toughness decrease. Thus, the upper limit for Mo is restricted to 3% and the upper limit for W is restricted to 6%.

### Mn: 0.3 - 30%, N (nitrogen): 0.05 - 0.5%, Cu: 0.3 - 5%, Co: 0.3 - 10%

These elements need not be included, but if they are included, they have an effect like Ni of stabilizing an austenite phase. In addition, like Cr, N has the effect of increasing pitting resistance. In order to obtain these effects, at least 0.3% of Mn, at least 0.05% ofN (nitrogen), at least 0.3% of Cu, and at least 0.3% of Co is included. If too much of any of these is included, it decreases hot workability and toughness. Thus, an the upper limits are restricted to 30% for Mn, 0.5% for N (nitrogen), 5% for Cu, and 10% for Co.

### Ti: 0.001 - 0.1 %, Zr: 0.001 - 0.1 %, Nb: 0.001 - 0.2%, V : 0.001 - 1.0%, Ta: 0.001 - 0.4%, Hf: 0.001 - 0.1%

These elements need not be included, but if they are included, they act to fix C and N in steel as carbonitrides. In addition, these elements act as solid solution strengthening elements in steel, and they increase the strength of the base metal. In order to obtain these effects, at least one is included each in an amount of at least 0.001%. If their contents are too high, their effects saturate, so the upper limit for Ti is 0.1 %, the upper limit for Zr is 0.1 %, the upper limit for Nb is 0.2%, the upper limit for V is 1.0%, the upper limit for Ta is 0.4%, and the upper limit for Hf is 0.1 %.

### B: 0.0001 - 0.02%, Mg: 0.0001 - 0.005%, Ca: 0.0001 - 0.005%, La: 0.0001 - 0.2%, Ce: 0.0001 - 0.2%, Y : 0.0001 - 0.4%, Sm : 0.0001 - 0.4%, Pr: 0.0001 - 0.4%, Nd: 0.0001-0.5%

These elements need not be included, but when they are included, B prevents grain boundary segregation of P and S, while Mg, Ca, La, Ce, Y, Sm, Pr, and Nd fix S to form a sulfide, whereby the hot workability of the steel is improved. In addition, if La, Ce, Y, Sm, Pr, and Nd are included in the oxide film in minute amounts, they have the effects of forming a dense oxide film and suppressing hydrogen penetration. However, if their contents are excessive, B forms carbo-borides, while Mg, Ca, La, Ce, Y, Sm, Pr, and Nd form excessive amounts of oxide inclusions and reduce hot workability and toughness. Accordingly, the upper limit on B is made 0.02%, the upper limit on Mg is made 0.005%, the upper limit on Ca is made 0.005%, the upper limit on La is made 0.2%, the upper limit on Ce is made 0.2%, the upper limit on Y is made 0.4%, the upper limit on Sm is made 0.4%, the upper limit on Pr is made 0.4%, and the upper limit on Nd is made 0.5%.

In order to obtain sufficient resistance to hydrogen embrittlement in a high pressure hydrogen gas environment, an austenite single phase structure is most suitable. However, if at least 90% by volume is an austenite phase, the reminder may be a ferrite phase, a martensite phase, or precipitates and intermetallic compounds.

In another preferred embodiment of the present invention, the following low alloy steel is preferably used as a base metal.

### Cr: At least 0.3% and less than 12%

In order to obtain a desired Fe-Cr compound oxide film, the base metal contains, in mass %, at least 0.3% of Cr. A content of 12% or more leads to an increase in manufacturing costs, so the upper limit is made less than 12%. In the present invention, a low alloy steel refers to a steel having a Cr content of at least 0.3% and less than 12%.

There are no particular restrictions on a low alloy steel according to the present invention as long as it has the above-described Cr content, but preferably the low alloy steel has the following contents of C, Si, Mn, and B.

### C: 0.01 - 1.0%, Si: 0.01 - 1%, Mn: 0.1 - 3%, B: 0.0001 - 0.02%

If at least one of these elements is included, the hardenability of the steel is increased and a high strength can be obtained. In order to obtain this effect, it is preferable to include at least 0.01% of C, at least 0.0 1 % of Si, at least 0.1% of Mn, and at least 0.0001% of B. It is more preferable to include at least 0.03% of C. Too high a content of these elements causes their effects to saturate and leads to a decrease in toughness. Therefore, the upper limits are preferably made 1.0% for C, 1% for Si, 3% for Mn, and 0.02% for B.

In addition, if desired, at least one substance selected from the below-described alloying element groups (i) and/or (ii) and/or (iii) may be included in a low alloy steel according to the present invention.
(i) Mo: 0.001 - 2%, W: 0.001 - 4%, Ti: 0.001 - 0.1 %, Zr: 0.001 - 0.1 %, Nb: 0.001 - 0.2%, V: 0.001 - 1.0%, Ta: 0.001 - 0.4%, Hf: 0.001 - 0.4%
   If these elements are included, they form fine carbides and nitrides, and they produce grain refinement and precipitation strengthening. In order to obtain these effects, the content of each is preferably at least 0.001 %. On the other hand, too high a content thereof causes their effects to saturate and leads to a decrease in toughness and mechanical properties, whereby the upper limit for Mo is made 2%, the upper limit for W is made 4%, the upper limit for Ti is made 0.1 %, the upper limit for Zr is made 0.1 %, the upper limit for Nb is made 0.2%, the upper limit for V is made 1.0%, the upper limit for Ta is made 0.4%, and the upper limit for Hf is made 0.4%.
(ii) Al: 0.005 - 1%, Mg: 0.0001 - 0.005%, Ca: 0.0001 - 0.005%, La: 0.0001 - 0.2%, Ce: 0.0001 - 0.2%, Y: 0.0001 - 0.4%, Sm: 0.0001 - 0.4%, Pr: 0.0001 - 0.4%, Nd: 0.0001 - 0.5%
   These elements can be included if desired. If they are included, they have the effect of deoxidizing steel. In order to obtain this effect, the content of Al is preferably at least 0.005% and the contents of the others are preferably at least 0.0001 % each. However, if their contents are too high, their effects saturate, so the upper limits are preferably 1% for Al, 0.005% for Mg, 0.005% for Ca, 0.2% for La, 0.2% for Ce, 0.4% for Y, 0.4% for Sm, 0.4% for Pr, and 0.5% for Nd.
(iii) Ni: 0.1% - 5%, Cu: 0.3 - 5%, Co: 0.3 - 10%
   If at least one of these elements is included, it has the effect of increasing rusting resistance and weathering resistance. In order to obtain these effects, at least 0.1% ofNi, at least 0.3% of Cu, and at least 0.3% of Co are preferably included. Too high a content thereof causes their effects to saturate and leads to an increase in costs, so the upper limits are preferably 5% for Ni, 5% for Cu, and 10% for Co.
   A low alloy steel according to the present invention contains various impurities in the same manner as a usual low alloy steel. For example, P, S, O (oxygen), and N are preferably limited as set forth below.

### P: at most 0.03%, S: at most 0.1%, O (oxygen): at most 0.01%, N (nitrogen): at most 0.1%

These elements are present in steel as impurities. They precipitate at grain boundaries and are present in steel in the form of nonmetallic inclusions, and they reduce toughness and resistance to hydrogen embrittlement. These effects become marked if P exceeds 0.03%, S exceeds 0.1%, O (oxygen) exceeds 0.0 1 %, or N (nitrogen) exceeds 0.1%, so the upper limits are preferably 0.03% for P, 0.1 % for S, 0.01 % for O (oxygen), and 0.1 % for N (nitrogen).

There are no particular restrictions on the structure or strength of a low alloy steel which is one preferred base metal of a steel according to the present invention, but in order to obtain good resistance to hydrogen embrittlement, it preferably has a lower bainite structure or a tempered martensite structure.

The operation and effects of the present invention will be explained more concretely by examples thereof.

### Example 1

50 kg of each of the low alloy steels and austenitic stainless steels having the chemical compositions shown in Table 3 were melted using a vacuum melting furnace and cast to form steel ingots. The ingots were then subjected to hot forging and hot rolling to obtain plates with a thickness of 5 mm. Then, two test pieces each measuring 50 mm wide, 50 mm long, and 0.5 mm thick were taken from these plates. For the low alloy steels and for a number of the stainless steels containing at least 3% of A1, initial heat treatment was omitted, and for the other stainless steels, initial heat treatment was carried out, and then second heat treatment was carried out in a hydrogen atmosphere with a controlled partial pressure of steam to form a compound oxide film on the surface.

Using one of each test piece, the composition and thickness of the compound oxide film formed on the surface was measured by the secondary ion mass spectroscopy method (SIMS) using nitrogen gas ions as sputtering gas. Namely, the atom % of Fe, Cr, Al, Mn, and Si was measured at various depths below the surface. Quantitative measurement of the amount of oxygen is difficult from a standpoint of accuracy, and the qualitative change from the surface was measured.

The distance from the surface to the depth at which the amount of oxygen became 1/2 was defined as the "thickness of the oxide film". The content of the alloying elements in the oxides was the average value over this thickness of the oxide film.

Next, one of each test piece was placed into an autoclave filled with hydrogen gas at 100 °C and 35 MPa, and an exposure test was carried out for 300 hours. For some of the test pieces, a metal layer of Al, Cu, and Zn was provided by flame coating prior to the exposure test, and then the test was carried out. The test pieces were recovered after the exposure test, and after removing an oxide film on the surface by machine grinding, the amount of hydrogen absorbed into the steel was analyzed. Analysis of the amount of hydrogen was carried out by the thermal conductiometric method after fusion in a current of inert gas.

Table 4 shows the composition and thickness of the oxide film obtained in this example, the amount of absorbed hydrogen, and the heat treatment conditions for each type of steel.

In the table, Nos. 27 to 30 and 41 to 50 are examples of this invention. For each of these, the amount of absorbed hydrogen was at most 10 ppm. Nos. 1 to 26, 31 to 40 and 51 - 70 are comparative examples.

For Nos. 1 - 26 and 31 - 40 an Fe-Cr compound oxide film was formed in each case, and the amount of absorbed hydrogen due to exposure was a low value of at most 3 ppm. In particular, for Nos. 2 - 4, 8, 10, 12, 14 - 19, 21, 23, 24, 31, 33 - 35, 37, 39, and 40, an Fe-Cr compound oxide film containing at least 30 atom % of each of Fe and Cr was formed, and it can be seen that the amount of absorbed hydrogen was an extremely low value of at most 0.5 ppm for the low alloy steels and at most 1.0 ppm for the stainless steels.

Nos. 4 - 6 and 24 - 26 were test pieces having a metal layer of Al, Cu, or Zn formed by flame coating atop the oxide film. The amount of absorbed hydrogen for these was an extremely low value of at most 0.5 ppm.

In Nos. 27 - 30 and 41 - 43 which were examples of the present invention, a compound oxide film containing all three of Fe, Cr, and Al was formed on a stainless steel base metal, and the amount of absorbed hydrogen after the exposure test was a sufficiently low value of less than 5 ppm. In particular, in the case in which Al was at least 50 atom %, the amount of absorbed hydrogen was at most 1.0 ppm, and almost no hydrogen was absorbed.

Nos. 51 - 70 were comparative examples. For each of these, at least 10 ppm of hydrogen was absorbed, and there was no effect of suppressing hydrogen penetration.

Figures 2 through 9 are graphs schematically showing analysis by the secondary ion mass spectroscopy method of the composition of compound oxide films obtained in this example.

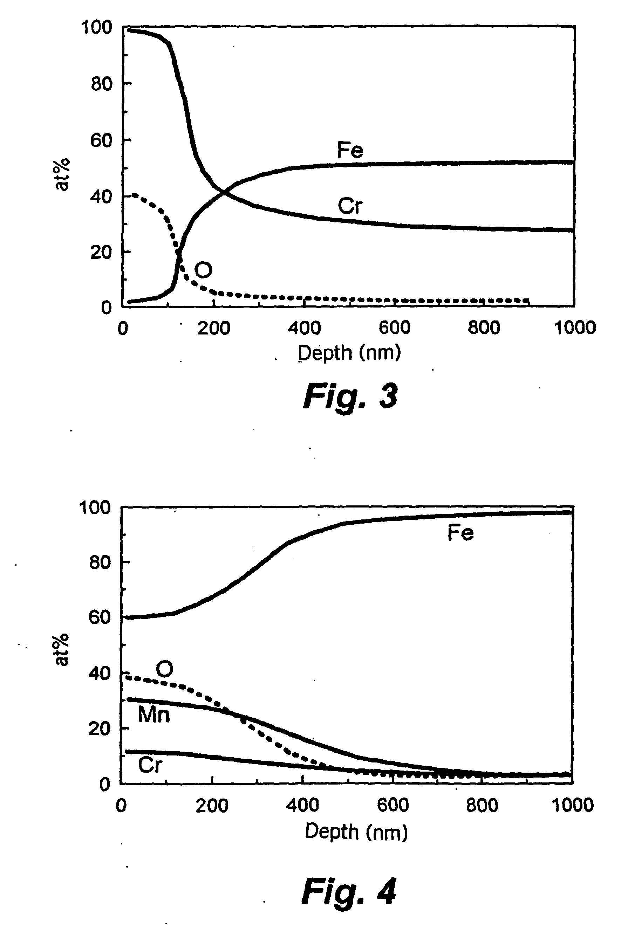

Figure 2 and Figure 3 show the results of analysis of the composition of a conventional single-phase oxide film. They correspond to Nos. 58 and 61, respectively, in Table 4, which are comparative examples.

Figure 4 shows the results of analysis of the composition of a compound oxide film containing at least 5 atom % of Fe and at least 5 atom % of Cr. This corresponds to No. 1 in Table 4, which is an example of the present invention.

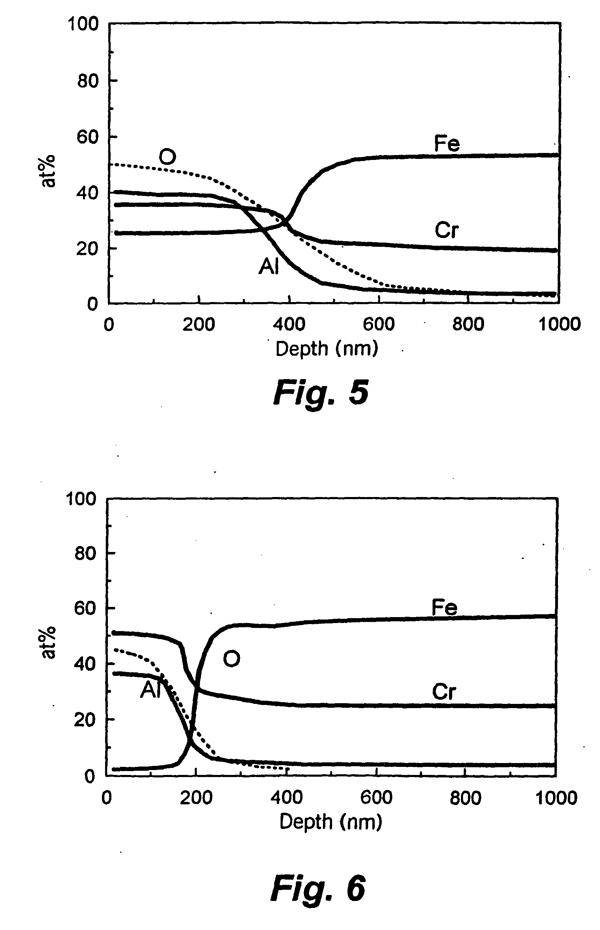

Figure 5 shows the results of analysis of the composition of a compound oxide film containing at least 5 atom % of Fe, at least 5 atom % of Cr, and at least 5 atom % of Al. This corresponds to No. 28 in Table 4, which is an example of the present invention.

Figure 6 shows the results of analysis of the composition of a compound oxide film containing at least 5 atom % of Al and at least 5 atom % of Cr. This corresponds to No. 46 in Table 4, which is an example of the present invention.

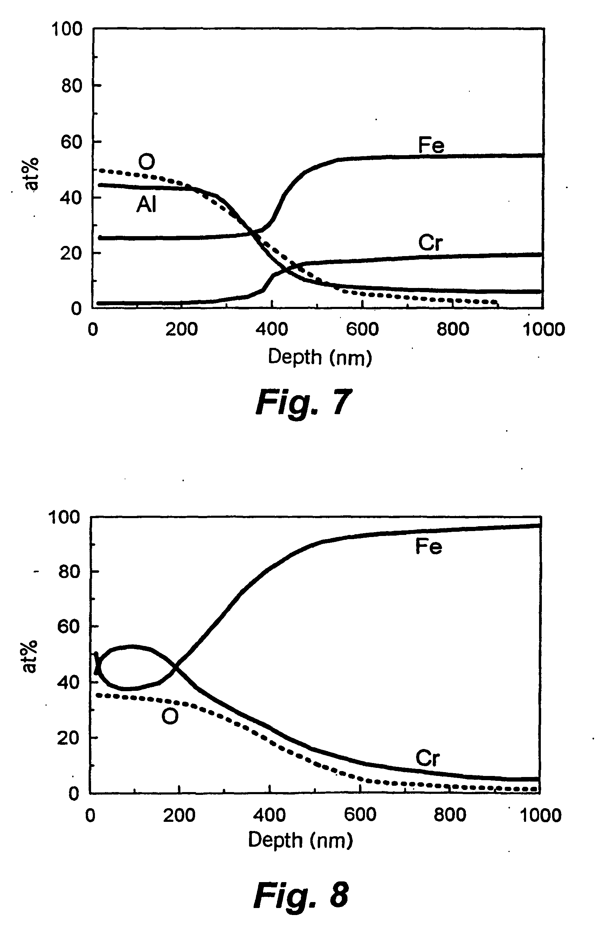

Figure 7 shows the results of analysis of the composition of a compound oxide film containing at least 5 atom % of Fe and at least 5 atom % of Al. This corresponds to No. 45 of Table 4, which is an example of the present invention.

Figure 8 shows the results of analysis of the composition of a compound oxide film containing at least 30 atom % of Fe and at least 30 atom % of Cr. This corresponds to No. 15 of Table 4 which is an example of the present invention.

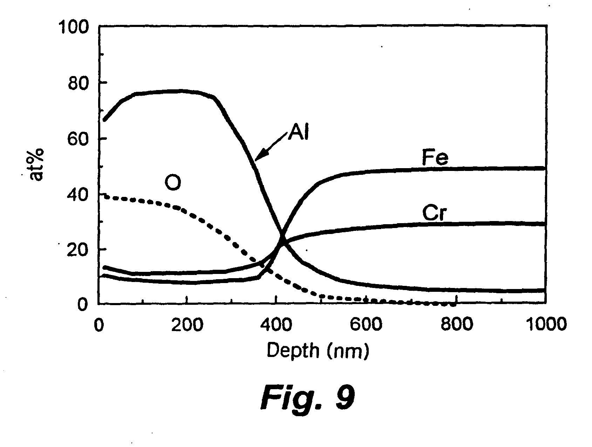

Figure 9 shows the results of analysis of the composition of a compound oxide film containing at least 50 atom % of Al. This corresponds to No. 27 of Table 4, which is an example of the present invention.

**Table 3**

| Steel | Chemical Composition (mass%, balance of Fe and inpurities) | | | | | | | |
|---|---|---|---|---|---|---|---|---|
| | C | Si | Mn | P | S | Cr | Ni | Al |
| A | 0.061 | 0.17 | 1.27 | 0.005 | 0.001 | 0.55 | - | - |
| B | 0.392 | 0.20 | 0.80 | 0.025 | 0.010 | 1.11 | - | 0.031 |
| C | 0.051 | 0.12 | 1.08 | 0.008 | 0.008 | 0.30 | - | - |
| D | 0.410 | 0.10 | 0.45 | 0.009 | 0.005 | 1.21 | - | - |
| E | 0.232 | 0.23 | 0.20 | 0.005 | 0.001 | 3.01 | - | 0.028 |
| F | 0.273 | 0.45 | 0.40 | 0.003 | 0.002 | 5.01 | - | - |
| G | 0.251 | 0.10 | 0.45 | 0.006 | 0.001 | 8.98 | - | - |
| H | 0.404 | 0.23 | 0.44 | 0.010 | 0.005 | 11.58 | - | 0.031 |
| I | 0.011 1 | 0.23 | 0.43 | 0.020 | 0.002 | 17.96 | 13.75 | 0.022 |
| * J | 0.008 | 0.02 | 0.20 | 0.008 | 0.001 | 17.56 | 15.22 | 1.121 |
| * K | 0.007 | 0.01 | 0.46 | 0.002 | 0.001 | 17.70 | 25.50 | 4.161 |
| L | 0.022 | 0.81 | 0.21 | 0.005 | 0.003 | 17.88 | 13.65 | 0.013 |
| M | 0.018 | 0.13 | 0.46 | 0.011 | 0.005 | 18.03 | 13.68 | 0.031 |
| N | 0.015 | 0.31 | 0.48 | 0.018 | 0.002 | 25.27 | 23.86 | 0.037 |
| O | 0.012 | 0.06 | 1.08 | 0.015 | 0.001 | 17.94 | 8.48 | 0.009 |
| P | 0.013 | 0.19 | 1.21 | 0.012 | 0.003 | 18.03 | 13.51 | 0.018 |
| * Q | 0.019 | 0.30 | 0.48 | 0.016 | 0.001 | 18.43 | 20.56 | 2.152 |
| * R | 0.022 | 0.45 | 0.53 | 0.009 | 0.003 | 15.41 | 23.21 | 3.181 |

| | | | | | | | | |
|---|---|---|---|---|---|---|---|---|
| *Base metals suitable for oxidation according to the method of the invention and, once suitably oxidised, for use in a high pressure hydrogen gas environment according to the invention | | | | | | | | |

**Table 4-1**

| No. | Steel | Oxide Film Composition (at %) | | | | | Oxide Film Thickness (nm) | Plating | Hydrogen Absorption (ppm) | Primary Heat Treatment | | Secondaty Heat Treatment | | |
|---|---|---|---|---|---|---|---|---|---|---|---|---|---|---|
| | | Fe | Cr | Al | Mn | Si | | | | Temp. (°C) | Time (h) | log(Partial Pressure of Steam,MPa) | Temp. (°C) | Time (h) |
| 1 | A | 68 | 7 | 0 | 25 | 0 | 232 | - | 0.9 | - | - | -1 | 1050 | 0.5 |
| 2 | A | 45 | 35 | 0 | 20 | 0 | 185 | - | 0.4 | - | - | -5 | 1050 | 0.5 |
| 3 | A | 59 | 31 | 0 | 10 | 0 | 122 | - | 0.5 | - | - | -5 | 1050 | 0.05 |
| 4 | A | 75 | 35 | 0 | 0 | 0 | 135 | Al | 0.5 | - | - | -3 | 1050 | 0.5 |
| 5 | A | 80 | 5 | 0 | 15 | 0 | 218 | Cu | 0.5 | - | - | -1 | 700 | 2 |
| 6 | A | 71 | 11 | 0 | 8 | 0 | 164 | Zn | 0.4 | - | - | -2 | 900 | 1 |
| 7 | B | 52 | 12 | 0 | 36 | 0 | 313 | - | 0.8 | - | - | -1 | 1080 | 0.5 |
| 8 | B | 38 | 35 | 0 | 27 | 0 | 431 | - | 0.4 | - | - | -4 | 1050 | 1 |
| 9 | C | 38 | 10 | 0 | 52 | 0 | 155 | - | 0.9 | - | - | -2 | 1100 | 1 |
| 10 | C | 33 | 35 | 0 | 33 | 0 | 208 | - | 0.4 | - | - | -5 | 1100 | 0.5 |
| 11 | D | 81 | 19 | 0 | 0 | 0 | 651 | - | 0.8 | - | - | -2 | 900 | 1 |
| 12 | D | 68 | 32 | 0 | 0 | 0 | 485 | - | 0.5 | - | - | -6 | 1050 | 0.5 |
| 13 | E | 74 | 26 | 0 | 0 | 0 | 585 | - | 0.9 | - | - | -2 | 900 | 1 |
| 14 | E | 31 | 69 | 0 | 0 | 0 | 209 | - | 0.4 | - | - | -4 | 1100 | 2 |
| 15 | F | 50 | 42 | 0 | 8 | 0 | 454 | - | 0.4 | - | - | -3 | 1050 | 0.5 |
| 16 | F | 34 | 61 | 0 | 5 | 0 | 213 | - | 0.3 | - | - | -8 | 1050 | 1 |
| 17 | G | 36 | 60 | 0 | 4 | 0 | 335 | - | 0.2 | - | - | -3 | 1050 | 0.5 |
| 18 | G | 32 | 65 | 0 | 3 | 0 | 210 | - | 0.3 | - | - | -8 | 1050 | 1 |
| 19 | H | 31 | 69 | 0 | 0 | 0 | 185 | - | 0.3 | - | - | -3 | 1050 | 0.5 |
| 20 | H | 9 | 91 | 0 | 0 | 0 | 131 | - | 0.8 | - | - | -8 | 1050 | 1 |

**Table 4-2**

| | | | | | | | | | | | | | | |
|---|---|---|---|---|---|---|---|---|---|---|---|---|---|---|
| 21 | I | 49 | 42 | 0 | 9 | 0 | 320 | - | 0.9 | 600 | 2 | -5 | 1150 | 0.05 |
| 22 | I | 48 | 17 | 0 | 35 | 0 | 532 | - | 2.9 | 900 | 1 | -1 | 1080 | 0.5 |
| 23 | I | 55 | 45 | 0 | 0 | 0 | 385 | - | 0.9 | 900 | 0.05 | -5 | 1100 | 0.5 |
| 24 | I | 35 | 75 | 0 | 0 | 0 | 135 | Al | 0.3 | 900 | 0.05 | -7 | 1100 | 1 |
| 25 | I | 47 | 16 | 0 | 37 | 0 | 608 | Cu | 0.5 | 900 | 1 | -1 | 1080 | 0.5 |
| 26 | I | 51 | 13 | 0 | 36 | 0 | 764 | Zn | 0.3 | 900 | 1 | -1 | 1080 | 0.5 |
| 27* | J | 12 | 12 | 76 | 0 | 0 | 313 | - | 0.8 | 900 | 0.05 | -4 | 1050 | 1 |
| 28* | J | 28 | 35 | 37 | 0 | 0 | 431 | - | 2.6 | 700 | 1 | -1 | 1080 | 0.5 |
| 29* | K | 8 | 10 | 80 | 0 | 2 | 155 | - | 0.9 | 900 | 0.05 | -7 | 1100 | 1 |
| 30* | K | 13 | 15 | 63 | 3 | 6 | 208 | - | 0.8 | - | - | -5 | 1100 | 0.5 |
| 31 | L | 51 | 38 | 0 | 0 | 11 | 251 | - | 0.7 | 900 | 0.05 | -5 | 1100 | 0.5 |
| 32 | L | 16 | 31 | 0 | 14 | 19 | 185 | - | 2.5 | 700 | 1 | -1 | 1080 | 0.5 |
| 33 | M | 54 | 46 | 0 | 0 | 0 | 185 | - | 0.9 | 900 | 0.05 | -5 | 1100 | 0.5 |
| 34 | M | 41 | 38 | 0 | 21 | 0 | 513 | - | 0.4 | 700 | 1 | -2 | 1100 | 0.5 |
| 35 | N | 35 | 65 | 0 | 0 | 0 | 154 | - | 0.6 | 900 | 0.05 | -5 | 1100 | 0.5 |
| 36 | N | 9 | 91 | 0 | 0 | 0 | 113 | - | 2.6 | 600 | 0.5 | -8 | 1030 | 0.5 |
| 37 | O | 36 | 31 | 0 | 33 | 0 | 232 | - | 0.9 | 900 | 0.05 | -1 | 1080 | 0.5 |
| 38 | O | 28 | 30 | 0 | 42 | 0 | 510 | - | 2.3 | 700 | 1 | -5 | 1150 | 0.05 |
| 39 | P | 48 | 51 | 0 | 0 | 1 | 245 | - | 0.9 | 900 | 0.05 | -5 | 1100 | 0.5 |
| 40 | P | 45 | 53 | 0 | 0 | 2 | 281 | - | 0.7 | 700 | 1 | -4 | 1050 | 1 |
| 41* | Q | 29 | 31 | 35 | 1 | 4 | 261 | - | 3.9 | 900 | 0.05 | -3 | 1050 | 1 |
| 42* | Q | 15 | 11 | 71 | 0 | 3 | 351 | - | 0.8 | 700 | 1 | -5 | 1100 | 0.5 |
| 43* | R | 11 | 6 | 82 | 0 | 1 | 159 | - | 0.5 | 900 | 0.05 | -4 | 1050 | 1 |
| 44* | R | 9 | 0 | 91 | 0 | 0 | 193 | - | 0.4 | - | - | -7 | 1100 | 1 |
| 45* | R | 26 | 3 | 41 | 14 | 16 | 361 | - | 2.4 | 900 | 2 | -8 | 1050 | 1 |
| 46* | R | 3 | 51 | 36 | 7 | 3 | 146 | - | 2.9 | - | - | -1 | 1050 | 1 |
| 47* | R | 21 | 0 | 45 | 18 | 16 | 193 | - | 2.1 | 900 | 2 | -8 | 1050 | 0.5 |
| 48* | R | 0 | 56 | 44 | 0 | 0 | 161 | - | 1.9 | - | - | -1 | 1000 | 2 |
| 49* | R | 0 | 21 | 79 | 0 | 0 | 183 | - | 0.3 | - | - | -2 | 1000 | 2 |
| 50* | R | 34 | 35 | 31 | 0 | 0 | 308 | - | 0.4 | 900 | 2 | -2 | 1000 | 2 |

| | | | | | | | | | | | | | | |
|---|---|---|---|---|---|---|---|---|---|---|---|---|---|---|
| *Steels with complex oxide film suitable for use in the invention | | | | | | | | | | | | | | |

**Table 4-3**

| | | | | | | | | | | | | | | |
|---|---|---|---|---|---|---|---|---|---|---|---|---|---|---|
| 51 | A | - | - | - | - | - | - | - | 15.3 | - | - | - | - | - |
| 52 | B | - | - | - | - | - | - | - | 17.2 | - | - | - | - | - |
| 53 | A | 69 | 0* | 0 | 31 | 0 | 214 | - | 16.4 | 700 | 2 | - | - | - |
| 54 | B | 95 | 0* | 0 | 5 | 0 | 315 | - | 15.3 | 1050 | 0.5 | - | - | - |
| 55 | A | 44 | 42 | 0 | 14 | 0 | 81* | - | 14.2 | - | - | -9 | 1050 | 1 |
| 56 | A | 62 | 30 | 0 | 8 | 0 | 76* | - | 16.0 | - | - | -3 | 650 | 2 |
| 57 | A | 58 | 31 | 0 | 11 | 0 | 66* | - | 14.9 | - | - | -4 | 1100 | 0.03 |
| 58 | A | 71 | 0* | 0 | 29 | 0 | 519 | - | 15.7 | - | - | 0 | 900 | 0.5 |
| 59 | A | 88 | 0* | 0 | 12 | 0 | 622 | - | 16.1 | - | - | -3 | 1200 | 0.05 |
| 60 | I | - | - | - | - | - | - | - | 25.4 | - | - | - | - | - |
| 61 | I | 0* | 10 | 0* | 0 | 0 | 113 | - | 18.4 | - | - | -5 | 1100 | 0.5 |
| 62 | I | 2* | 0 | 0* | 9 | 0 | 110 | - | 19.8 | 500 | 2 | -5 | 1100 | 0.5 |
| 63 | I | 3* | 89 | 0* | 17 | 5 | 120 | - | 20.5 | 900 | 0.03 | -5 | 1100 | 0.5 |
| 64 | I | 87 | 75 | 0* | 10 | 0 | 505 | - | 16.4 | 1000 | 0.5 | -5 | 1100 | 0.5 |
| 65 | I | 50 | 3* | 0 | 2 | 0 | 41* | - | 23.5 | 700 | 1 | -9 | 1050 | 1 |
| 66 | I | 51 | 48 | 0 | 0 | 0 | 51* | - | 24.2 | 700 | 1 | -5 | 1050 | 0.03 |
| 67 | I | 48 | 49 | 0 | 0 | 0 | 63* | - | 25.8 | 700 | 1 | -5 | 900 | 1 |
| 68 | J | - | 52 | - | - | - | - | - | 27.6 | - | - | - | - | - |
| 69 | J | 2 | - | 96 | 0 | 0 | 115 | - | 16.5 | - | - | -5 | 1100 | 0.5 |
| 70 | K | 3* | 2 | 95 | 0 | 0 | 113 | - | 10.4 | 700 | 1 | -9 | 1050 | 1 |
| | | | 2* | | | | | | | | | | | |

| | | | | | | | | | | | | | | |
|---|---|---|---|---|---|---|---|---|---|---|---|---|---|---|
| *Steels with complex oxide film suitable for use in the invention | | | | | | | | | | | | | | |

### Industrial Applicability

It has been found that the use of steels according to the present invention avoids penetration of hydrogen into the steel in a high pressure hydrogen gas environment of at least 35 MPa, so it provides excellent resistance to hydrogen embrittlement. By forming components of all types of structural equipment used in fuel cell automobiles and hydrogen gas stations such as hydrogen gas cylinders, piping, and valves from such a steel, handling of high pressure hydrogen gas at 35 - 70 MPa can be safely carried out. As such, it greatly contributes to the spread of fuel cell automobiles, so its significance is great.

## Claims

1. Use of a steel material in a high pressure hydrogen gas environment of 35 MPa or above, said steel material containing, in mass %, 12 - 30% of Cr and 0.005 - 6% of Al and having on its surface an oxide film for preventing hydrogen penetration containing 5 to 95 atom % of A1 and at least one of Cr: 5 atom % or more and Fe: 5 atom % or more, wherein the atomic percentage of each metallic element in the oxide layer is calculated as the percentage of atoms of a metallic element relative to the total amount of all metallic elements, wherein the oxide film has a thickness of at least 100 nm.

2. Use according to claim 1, wherein the steel contains, in mass %, 12 - 30% of Cr and 1 - 6% of Al, wherein the oxide film contains at least 50 atom % of Al.

3. Use according to claim 1 or 2, wherein a metal layer comprising at least one of Al, Cu, and Zn is present on the oxide film.

4. A method of manufacturing a steel as set forth in claim 1 **characterized by** heating a steel containing 12 - 30% of Cr and 0.005 to 6% of Al in air at a temperature of 600 - 900 °C for at least 3 minutes and at most 2 hours and then heating it in a hydrogen atmosphere containing steam at a partial pressure controlled to 10⁻⁸ to 10⁻¹ MPa at a temperature of at least 700°C and at most 1200 °C for at least 3 minutes and at most 2 hours.

5. A method according to claim 4, wherein the Al content of the steel is 1 to 6 mass %.

## Patentansprüche

1. Verwendung eines Stahlmaterials in einer Hochdruck-Wasserstoffgasumgebung von 35 MPa oder höher, wobei das Stahlmaterial in Masseprozent 12 - 30% Cr und 0,005 - 6% Al enthält und auf seiner Oberfläche einen Oxidfilm zum Verhindern von Wasserstoffeindringen, der 5 bis 95 Atom-% Al und mindestens eines von Cr: 5 Atom-% und Fe: 5 Atom-% oder mehr enthält, aufweist, wobei der Atomprozentsatz jedes Metallelements in der Oxidschicht als Prozentsatz von Atomen eines Metallelements im Verhältnis zur Gesamtmenge aller Metallelemente berechnet ist, wobei der Oxidfilm eine Dicke von mindestens 100 nm aufweist.

2. Verwendung nach Anspruch 1, **dadurch gekennzeichnet, dass** der Stahl in Masseprozent 12 - 30% Cr und 1 - 6% Al enthält, wobei der Oxidfilm mindestens 50 Atom-% Al enthält.

3. Verwendung nach Anspruch 1 oder 2, **dadurch gekennzeichnet, dass** eine Metallschicht, die mindestens eines von Al, Cu und Zn umfasst, auf dem Oxidfilm vorhanden ist.

4. Verfahren zum Herstellen eines Stahls nach Anspruch 1, **gekennzeichnet durch** Erhitzen eines Stahls, der 12 - 30% Cr und 0,005 bis 6% Al enthält, in Luft bei einer Temperatur von 600 - 900°C mindestens 3 Minuten und höchstens 2 Stunden lang und dann Erhitzen desselben in einer Wasserstoffatmosphäre, die Dampf bei einem auf 10⁻⁸ bis 10⁻¹ MPa gesteuerten Partialdruck enthält, bei einer Temperatur von mindestens 700°C und höchstens 1200°C mindestens 3 Minuten und höchstens 2 Stunden lang.

5. Verfahren nach Anspruch 4, **dadurch gekennzeichnet, dass** der Al-Gehalt des Stahls 1 bis 6 Masseprozent beträgt.

## Revendications

1. Utilisation d'un matériau en acier dans un environnement d'hydrogène gazeux, sous une pression élevée de 35 MPa ou plus, ledit matériau en acier contenant, en pourcentages en masse, 12 à 30 % de Cr et 0,005 à 6 % d'Al, et ayant sur sa surface un film d'oxyde pour empêcher la pénétration d'hydrogène, contenant 5 à 95 % atomiques d'Al et au moins l'un parmi 5 % atomiques ou plus de Cr et 5 % atomiques ou plus de Fe, le pourcentage atomique de chaque élément métallique dans la couche d'oxyde étant calculé sous la forme du pourcentage d'atomes d'un élément métallique par rapport à la quantité totale de tous les éléments métalliques, et le film d'oxyde ayant une épaisseur d'au moins 100 nm.

2. Utilisation selon la revendication 1, dans laquelle l'acier contient, en pourcentages en masse, 12 à 30 % de Cr et 1 à 6 % d'Al, et dans laquelle le film d'oxyde contient au moins 50 % atomiques d'Al.

3. Utilisation selon la revendication 1 ou 2, dans laquelle une couche métallique comprenant au moins l'un parmi Al, Cu et Zn est présente sur le film d'oxyde.

4. Procédé pour fabriquer un acier tel que présenté dans la revendication 1, **caractérisé par** le chauffage d'un acier contenant 12 à 30 % de Cr et 0,005 à 6 % d'Al dans de l'air à une température de 600 à 900°C, pendant au moins 3 minutes et au plus 2 heures, et ensuite son chauffage dans une atmosphère d'hydrogène contenant de la vapeur sous une pression partielle contrôlée de 10⁻⁸ à 10⁻¹ MPa à une température d'au moins 700°C et d'au plus 1200°C pendant au moins 3 minutes et au plus 2 heures.

5. Procédé selon la revendication 4, dans lequel la teneur en Al de l'acier est de 1 à 6 % en masse.
